# EUROPEAN PATENT APPLICATION

(11) **EP 4 838 326 A1**
(43) Date of publication of application: **11.11.2026**
(21) Application number: 25305773.1
(22) Date of filing: 28.05.2025
(51) Int. Cl.: G05D 1/249, B25J 9/00, B65G 43/00, B66F 9/06, G05B 19/418, G05D 1/65, G05D 105/28, G05D 107/70, G05D 109/10, G06Q 10/08

(54) **METHOD AND SYSTEM FOR WEIGHT MEASUREMENT AND CONTROL OF AUTOMATED GUIDED VEHICLES**

(30) Priority: 05.05.2025 EP 25305640
(71) Applicant: Exotec Product France, 59170 Croix (FR)
(72) Inventor: SIX, Benjamin, 59000 Lille (FR); ALTIERI, Francois, 59510 Hem (FR); CHANU, Simon, 59170 Croix (FR)
(74) Representative: BCF Global

(57) **Abstract**

A computer-implemented method for controlling an automated guided vehicle (AGV) at a preparation station in a warehouse, the preparation station extending along a path comprising a pickup station for loading and unloading articles carried by the AGV. The method includes causing the AGV to enter the preparation station and move over a weight sensing area, while adjusting operating parameters of the AGV during movement. The method further includes obtaining weight values associated with the AGV and calculating a weight dynamic pattern based on the obtained values. The method determines whether at least one article has been loaded or unloaded at the pickup station by analyzing the weight dynamic pattern. Upon determining a load or unload event, the method adjusts the operating parameters of the AGV accordingly.

## Description

### FIELD

The present technology is generally related to warehouse automation, and more specifically, to methods and systems for controlling automated guided vehicles (AGVs) that retrieve articles in a warehouse.

### BACKGROUND

In recent years, warehouse automation has experienced substantial growth due to increased consumer demand and the rapid expansion of online retail markets. Automated guided vehicles (AGVs) are increasingly being employed in warehouses to facilitate the retrieval and transport of articles stored into containers, such as bins or trays. Such AGVs can reduce manual labor demands and help maintain operational consistency within warehouse facilities. Additionally, the integration of AGVs into warehouse workflows may allow improved handling and organization of articles within large-scale storage facilities.

Warehouses may be typically organized with racks that form a structured grid of aisles and avenues. Along these aisles and avenues, containers are stored within racks, often at multiple height levels to optimize space. Each designated location for a container is commonly referred to as a "cell" or "alveolus". This structured environment enables efficient navigation and storage but may also introduce challenges for AGVs in terms of routing, access, and timing as it will be further detailed below.

AGVs used in warehouse environments generally operate based on predefined instructions or task assignments, often transmitted wirelessly from a central management system. These AGVs can navigate within the warehouse using onboard sensors, including cameras, Light Detection and Ranging (LiDAR), or ultrasonic sensors, to perceive their environment. Navigation typically relies on methods such as simultaneous localization and mapping (SLAM) or by following physical markers placed throughout the warehouse. Upon receiving retrieval instructions, these AGVs autonomously travel to specified storage locations, grasp or lift the desired articles using manipulators or lifting mechanisms and deliver the retrieved articles to designated drop-off locations for further processing or shipment. Operations of AGVs within warehouses may be supervised remotely or managed autonomously by centralized computer systems.

One challenge associated with existing implementations of AGVs in warehouses relates to the need to dynamically measure their weight and adjust operating parameters while minimizing halt time, thereby maintaining continuous movement and operational efficiency. This challenge may become even more prevalent at so-called order preparation stations, where a high throughput of AGVs arriving at a preparation station may be required. Any interruption or delay in the flow of AGVs at the preparation station may lead to congestion, reduced system responsiveness, and ultimately a potential decline in overall warehouse performance.

In light of these considerations, at least some techniques have been developed to address challenges associated with AGVs in dynamic warehouse environments by integrating weight measurement to detect transfer of articles.

**US Patent no.** US 11,866,257 B2 discloses an automated warehouse storage system including a multilevel storage array. Each aisle has a set of storage levels and each level has storage locations distributed along the aisle. The system allows reading outputs of weight sensors detecting weights of robots. The system measures a weight reduction in a first robot and a weight increase in a second robot when a transfer is made, so the system is not solely dependent on the voice input of pick quantity by the human picker and can, for example, detect an "over-pick".

Despite these recent advancements, there remains scope for improvement in systems and methods that enhance the adaptability of AGVs to dynamic warehouse environments and evolving operational requirements.

### SUMMARY

Developers of the present technology have devised methods and devices for overcoming at least some drawbacks present in prior art solutions.

Developers of the present technology have realized that conventional solutions do not adequately address the need for dynamic weight measurement and real-time parameter adjustment in AGVs while limiting movement interruption within warehouse environments.

To address the dynamic nature of warehouse environments, developers of the present technology have devised methods and systems that enable dynamic adjustment of operating parameters in AGVs based on real-time weight measurement, while minimizing halt time during the weight measurement and parameter adjustment process.

Some embodiments of the present technology can be used by warehouse operators, logistics providers, e-commerce fulfillment centers, distribution facilities, and similar entities requiring automated solutions for retrieving, transporting, and managing inventory articles.

In a first broad aspect of the present technology, there is provided a method for controlling an automated guided vehicle (AGV) at a preparation station extending along a designated area, the designated area comprising a pickup station allowing loading and unloading of articles carried by the AGV. The method comprises causing the AGV to enter the preparation station, causing the AGV to move over a weight sensing area, adjusting operating parameters of the AGV while the AGV moves over the weight sensing area, obtaining weight values associated with the AGV, calculating a weight dynamic pattern based on the weight values, determining that at least one article has been loaded or unloaded at the pickup station, and, in response to the determination that the article has been loaded or unloaded at the pickup station, adjusting operating parameters of the AGV.

It is contemplated that such embodiments may enable efficient and accurate determination of whether an article has been loaded or unloaded while limiting halt time, thereby improving operational throughput. In some embodiments, limiting halt time may comprise reducing halt time compared to approached previously known and/or removing a necessity for a halt time altogether.

In the context of the present technology, the challenge of minimizing or eliminating halt time may be referred to as the "early departure" problem. This expression aims at capturing a need for AGVs to resume movement as early as possible - ideally without waiting for a full confirmation of load or unload events-while still ensuring that operations remain reliable and accurate. Addressing the early departure problem may allow unlocking higher throughput and smoother coordination between AGVs and other elements of the warehouse system.

In some embodiments, the method further comprises reducing a speed of displacement of the AGV while the AGV moves over the weight sensing area.

It is contemplated that such embodiments may improve the accuracy of weight measurement by minimizing oscillations that can occur during rapid movement.

In some embodiments, reducing the speed of displacement of the AGV comprises stopping the displacement of the AGV for a given period of time.

It is contemplated that such embodiments may be advantageous in situations where precise weight measurement is critical and minor oscillations can cause significant inaccuracies.

In some embodiments, adjusting operating parameters of the AGV in response to the determination that the article has been loaded or unloaded at the pickup station comprises allowing the AGV to leave the preparation station.

It is contemplated that such embodiments may ensure that the AGV does not leave prematurely before the loading or unloading process is confirmed to be complete, thereby preventing errors in logistics operations.

In some embodiments, the AGV remains in movement while the steps of obtaining weight values associated with the AGV occurs and the operating parameters of the AGV are monitored and dynamically adjusted to optimize a precision of the calculated weight difference.

It is contemplated that such embodiments may minimize disruptions to the AGV workflow by allowing weight measurement to take place in motion, thereby reducing idle time.

In some embodiments, calculating the weight dynamic pattern comprises executing a dynamic analysis of the weight values that accounts for a speed and/or a load configuration of the AGV.

It is contemplated that such embodiments may improve the accuracy of the calculated weight difference by taking into account variables that can affect weight distribution during movement.

In some embodiments, the weight dynamic pattern is predicted by a machine-learning algorithm that has been trained on weight variation patterns of objects moving over the sensing area, where the weight variation patterns are reflective of an acceleration and/or a deceleration of the AGV while passing over the weight sensing area.

It is contemplated that such embodiments may enhance the precision of the system by leveraging adaptive learning techniques that account for varying operational conditions.

In some embodiments, determining that at least one article has been loaded or unloaded at the pickup station comprises comparing the weight dynamic pattern with entries of a database comprising weights associated with articles, weight dynamic patterns associated with articles, weights of the AGV without a load, weights of containers configured to be carried by the AGV, and/or weight adjustment values accounting for a speed of the AGV while passing over the weight sensing area.

It is contemplated that such embodiments may increase the robustness of the detection process by utilizing comprehensive reference data, thereby minimizing false positives or negatives.

In some embodiments, obtaining weight values associated with the AGV comprises obtaining a series of weight values over a period of time and/or at a given frequency.

It is contemplated that such embodiments may allow for a more detailed analysis of weight variations, thereby improving the reliability of the detected pattern.

In some embodiments, the period of time starts when the AGV engages on the weight sensing area and stops when the AGV disengages from the weight sensing area.

It is contemplated that such embodiments may optimize the data acquisition process by limiting it to the duration when the AGV is on the weight sensing area.

In some embodiments, the given frequency is selected from a range of weight measurement frequencies.

It is contemplated that such embodiments may offer flexibility in configuring the measurement process according to operational requirements, balancing between accuracy and speed.

In some embodiments, determining, based on the weight dynamic pattern (1000), that the at least one article (406) has been loaded or unloaded at the pickup station (920) comprises comparing the weight dynamic pattern (1000) with at least one of an anticipated mass of the AGV if an unloading event would occur and/or an anticipated mass of the AGV if a loading event would occur.

It is contemplated that such embodiments may offer flexibility in configuring the measurement process according to operational requirements.

In a further broad aspect of the present technology, there is provided a system configured to perform the method as described.

It is contemplated that such embodiments may facilitate the integration of the method into existing AGV-based warehouse systems without requiring significant hardware modifications.

In some embodiments of the system, the system comprises a logistic system comprising an AGV configured to carry articles located within a container, a preparation station, and a controller configured to execute the method as described.

It is contemplated that such embodiments may streamline the logistics process by combining automated weight measurement with dynamic AGV control.

In a further broad aspect of the present technology, there is provided a non-transitory computer-readable medium comprising instructions which, when executed by a processor, cause the execution of the method as described.

It is contemplated that such embodiments may enable efficient deployment of the method on various hardware configurations.

In another broad aspect of the present technology, there is provided a method for controlling an automated guided vehicle, the method comprising causing the AGV to move over a weight sensing area, adjusting operating parameters of the AGV while the AGV moves over the weight sensing area, obtaining weight values associated with the AGV, calculating a weight dynamic pattern based on the weight values, and based on the weight dynamic pattern, adjusting operating parameters of the AGV.

It is contemplated that such embodiments may enhance the responsiveness of the AGV to varying weight conditions, thereby improving the adaptability of the system.

In yet another broad aspect of the present technology, there is provided a method for weighing an automated guided vehicle, the method comprising causing the AGV to move over a weight sensing area, adjusting operating parameters of the AGV while the AGV moves over the weight sensing area, obtaining weight values associated with the AGV, calculating a weight dynamic pattern based on the weight values, wherein the AGV remains in movement while the steps of obtaining weight values associated with the AGV occurs, and the operating parameters of the AGV are monitored and dynamically adjusted to optimize a precision of the obtained weight values.

It is contemplated that such embodiments may enable real-time weight tracking while maintaining continuous operation, thereby minimizing disruptions to the workflow.

In the context of the present technology, **"automated guided vehicle (AGV)"** refers to a robotic system capable of performing tasks such as navigation, article retrieval, and transportation within a warehouse environment without continuous human intervention. Such robots may use onboard sensors and computational models to perceive their surroundings and make real-time decisions.

In the context of the present technology, an **"article"** refers to any individual unit of goods or merchandise stored, retrieved, or transported within an automated storage and retrieval system (ASRS), including but not limited to packaged products or individual components.

In the context of the present technology, **"adaptive navigation"** refers to a technique that enables an AGV to adjust its movement path in response to changes in its environment, such as dynamic obstacles, layout modifications, or variations in storage arrangements. This may involve real-time data processing from multiple sensors.

In the context of the present technology, **"central management system"** refers to a computing system that coordinates, monitors, and assigns missions to multiple AGVs within a warehouse. It may communicate wirelessly with the AGVs and process operational data to optimize mission execution. Additionally, the central management system may interact with other components of the warehouse environment, including operator interfaces such as Human-Machine Interfaces (HMIs), to facilitate real-time monitoring and control.

In the context of the present technology, **"container"** refers to a bin, tray, box, receptacle or the like, having at least one opening. A container may have a rectangular shape, or may be alternatively shaped or sized, so as to define fewer than, or greater than, four walls.

In the context of the present technology, **"task"** refers to an individual operation or action performed by an AGV within a warehouse environment. A task may include specific actions such as picking up an article, transporting an article from one location to another, or positioning the AGV at a designated spot. Tasks are the fundamental units of work that collectively form a mission.

In the context of the present technology, **"mission"** refers to a group or set of related tasks assigned to an AGV for completion within a warehouse environment. A mission may include multiple tasks that collectively achieve a larger objective, such as retrieving multiple articles from different storage locations and delivering them to an order preparation station. Missions may be dynamically adjusted based on real-time warehouse conditions and operational requirements.

In the context of the present technology, **"mission assignment"** refers to the process by which an AGV is allocated a specific retrieval, transportation, or operational task within a warehouse environment. Assignments may be dynamically updated based on real-time warehouse conditions.

In the context of the present technology, **"warehouse environment"** refers to a controlled storage and logistics space where containers or articles are stocked, retrieved, and transported. It may contain shelving units, conveyors, preparation stations, designated pathways, and operational zones for movement of AGVs.

In the context of the present technology, **"wireless communication interface"** refers to a hardware and software module that enables an AGV and other autonomous robots to exchange data with external systems, such as a central management system or other AGVs and other autonomous robots. Communication protocols may include Wi-Fi, Bluetooth, or any other proprietary or non-proprietary wireless networks.

In the context of the present technology, **"sensor fusion"** refers to a technique that combines data from multiple sensors, such as LiDAR, cameras, and ultrasonic sensors, to improve an AGV' or other autonomous robot's perception and decision-making. This may enhance localization, obstacle detection, and mapping accuracy.

In the context of the present technology, **"localization"** refers to the process by which an AGV determines its position within a warehouse environment using data from sensors, such as LiDAR, cameras, or inertial measurement units. Localization may be used in conjunction with mapping techniques.

In the context of the present technology, **"path planning"** refers to a computational technique that determines an optimal route for an AGV to travel from a starting position to a target location while avoiding obstacles and navigating warehouse structures.

In the context of the present technology, **"navigation algorithm"** refers to a set of computational rules that govern how an AGV determines its movement path for a given assigned mission within a warehouse, accounting for factors such as obstacle presence, layout constraints, and mission priority.

In the context of the present technology, **"pick-and-place operation"** refers to a process of retrieving one or more articles from a container (such as a receptacle) and transferring them to a different container (such as a shipment package) within a warehouse environment. The **"pick-and-place operation"** may be executed either by a human operator or by an AGV using a robot arm.

In the context of the present technology, **"article retrieval operation"** refers to the sequence of actions performed either by a human operator or by an AGV to locate, grasp, and transport an article from a storage location to a target destination within a warehouse.

In the context of the present technology, **"waypoint navigation"** refers to a navigation technique where an AGV follows a predefined series of spatial coordinates (waypoints) to reach its target destination.

In the context of the present technology, **"proximity sensor"** refers to a sensing device that detects the presence of nearby objects or obstacles without direct physical contact, often using infrared, ultrasonic, or capacitive sensing methods.

In the context of the present technology, **"robot mission coordinator"** refers to the system responsible for managing and optimizing the execution of missions performed by the AGVs within an automated storage and retrieval system (ASRS). This includes orchestrating storage and retrieval operations, assigning tasks to AGVs, coordinating their movements to prevent conflicts, and ensuring efficient inventory management.

In the present disclosure, the terms "a" or "an" are defined to mean "at least one", that is, these terms do not exclude a plural number of items, unless stated otherwise.

In the present disclosure, terms such as "substantially", "generally" and "about", which modify a value, condition or characteristic of a feature of an example embodiment, should be understood to mean that the value, condition or characteristic is defined within tolerances that are acceptable for the proper operation of the example embodiment for its intended application.

In the present disclosure, unless stated otherwise, the terms "connected" and "coupled", and derivatives and variants thereof, refer herein to any structural or functional connection or coupling, either direct or indirect, between two or more elements. For example, the connection or coupling between the elements can be acoustical, mechanical, optical, electrical, thermal, logical, or any combinations thereof.

In the present disclosure, expressions such as "match", "matching" and "matched", including variants and derivatives thereof, are intended to refer herein to a condition in which two or more elements are either the same or within some predetermined tolerance of each other. That is, these terms are meant to encompass not only "exactly" or "identically" matching the two elements but also "substantially", "approximately" or "subjectively" matching the two or more elements, as well as providing a higher or best match among a plurality of matching possibilities.

In the present disclosure, the expression "based on" is intended to mean "based at least partly on", that is, this expression can mean "based solely on" or "based partially on", and so should not be interpreted in a limited manner. More particularly, the expression "based on" could also be understood as meaning "depending on", "representative of", "indicative of", "associated with" or similar expressions.

In the present disclosure, "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" indicates an "or" relationship between associated objects. "At least one of the following items (pieces)" or a similar expression thereof indicates any combination of these items, including a single item (piece) or any combination of a plurality of items (pieces). For example, "at least one of A, B, or C" includes: only A; only B; only C; A and B; A and C; B and C; or A, B, and C, and "at least one of A, B, and C" may also be understood as including: only A; only B; only C; A and B; A and C; B and C; or A, B, and C. In addition, unless otherwise specified, ordinal numbers such as "first" and "second" in implementations of this application are used to distinguish between a plurality of objects, and are not used to limit a sequence, a time sequence, priorities, or importance of the plurality of objects.

A person skilled in the art should understand that implementations of this application may be provided as a method, an apparatus (or system), computer-readable storage medium, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device and enable a machine to execute the instructions. When executed by any computer or the processor of a programmable data processing device, the instructions cause the apparatus to implement specific functions as described in one or more procedures in the flowcharts and/or one or more blocks in the block diagrams. The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or one or more blocks in the block diagrams.

The computer program instructions may alternatively be loaded onto a computer or another programmable data processing device, specifically configured to control AGVs, so that a series of operations and steps are performed on the computer or the programmable device, generating computer-implemented processing. Therefore, the instructions executed on the computer or on another programmable device provide steps for implementing specific functions as described in one or more procedures in the flowcharts and/or one or more blocks in the block diagrams.

It is clear that a person skilled in the art can make various modifications and variations to this application without departing from the scope of this disclosure. This disclosure is intended to cover these modifications and variations of this application provided that they fall within the scope of protection defined by the following claims and their equivalent technologies.

### BRIEF DESCRIPTION OF THE DRAWINGS

For a better understanding of the present technology, as well as other aspects and further features thereof, reference is made to the following description which is to be used in conjunction with the accompanying drawings, where:
FIG. 1 illustrates a schematic representation of an automated storage and retrieval system (ASRS) with a storage area within a warehouse environment, in accordance with at least some non-limiting implementations of the present technology.
FIG. 2 illustrates a schematic block diagram of a networked environment that facilitates data communication and control of AGVs within a warehouse, in accordance with at least some non-limiting implementations of the present technology.
FIG. 3 illustrates an exemplary configuration of an autonomous guided vehicle (AGV) for transporting articles within a warehouse, in accordance with at least some non-limiting implementations of the present technology.
FIG. 4 illustrates an exemplary robotic arm of an automated guided vehicle configured for performing pick-and-place operations within a warehouse environment, in accordance with at least some non-limiting implementations of the present technology.
FIG. 5 illustrates a picking operation involving a receptacle and the end effector of the robotic arm, highlighting the spatial configuration of the receptacle during the grasping process, in accordance with at least some non-limiting implementations of the present technology.
FIG. 6 illustrates a control system for managing the movement and operation of an automated guided vehicle, including navigation sensors, control circuitry, and drive safety control circuitry, in accordance with at least some non-limiting implementations of the present technology.
FIG. 7 illustrates an example of a robot mission assignment, demonstrating how missions are allocated to automated guided vehicles within a warehouse environment, in accordance with at least some non-limiting implementations of the present technology.
FIG. 8 illustrates a workstation configured for automated guided vehicle operations, featuring an incoming path, an outgoing path, and a weight sensing area for dynamic weight measurement during pick-and-place operations, in accordance with at least some non-limiting implementations of the present technology.
FIG. 9 illustrates an example scenario involving multiple automated guided vehicles arriving at the workstation for weight measurement and performing pick-and-place operations, either by robotic arms or human operators, in accordance with at least some non-limiting implementations of the present technology.
FIG. 10 illustrates a weight dynamic oscillation pattern depicting changes in the measured weight of an automated guided vehicle during movement over the weight sensing area, in accordance with at least some non-limiting implementations of the present technology.
FIG. 11 illustrates a zoomed-in portion of the weight dynamic pattern depicted in FIG. 10, showing detailed variations associated with pick-and-place operations, including moments of weight stabilization and fluctuation, in accordance with at least some non-limiting implementations of the present technology.
FIG. 12 illustrates an example database containing pre-stored weight dynamic patterns and associated article weights, used by the robot mission coordinator to detect whether an article has been picked or placed by comparing with real-time patterns, in accordance with at least some non-limiting implementations of the present technology.
FIG. 13 is a scheme-block illustration of a method executed by the robot mission coordinator of the computing environment of FIG. 2, in accordance with at least some non-limiting embodiments of the present technology.
FIG. 14 is a scheme-block illustration of a method executed by the robot mission coordinator of the computing environment of FIG. 2, in accordance with at least some non-limiting embodiments of the present technology.
FIG. 15 is a scheme-block illustration of a method executed by the robot mission coordinator of the computing environment of FIG. 2, in accordance with at least some non-limiting embodiments of the present technology.
FIG. 16 is a block diagram of an example programmable circuitry platform structured to execute and/or instantiate machine-readable instructions to implement the present technology.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some implementations of the present technology, the processor may be a general purpose processor, such as a central processing unit (CPU) or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

With these fundamentals in place, we will now consider some non-limiting examples to illustrate various implementations of aspects of the present technology.

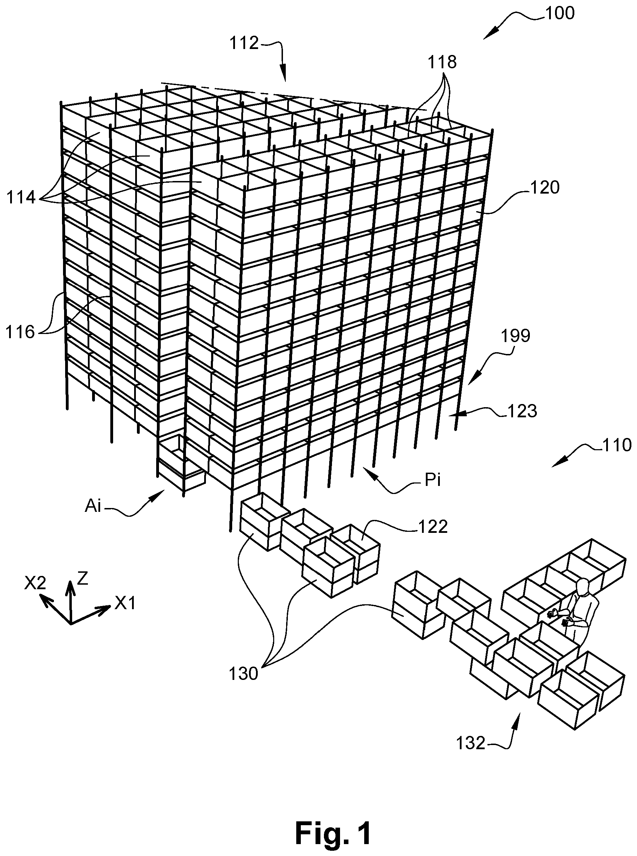

FIG. 1 illustrates a schematic representation of an automated storage and retrieval system (ASRS) 110 with a storage area 112 within a warehouse environment 100, in accordance with at least some non-limiting implementations of the present technology.

The system follows a coordinate system: Z for the vertical direction, X1 for one horizontal direction, and X2 for the other horizontal direction, X2 being perpendicular to X1. The storage area 112 contains storage racks 114, which hold stored articles.

Each rack 114 has at least one aisle Ai along X1 for article access and consists of vertical uprights 116, which provide support. The uprights are spaced apart along X2 to form compartments for storage. Furthermore each rack 114 has storage columns 118, aligned along X1, allowing vertical stacking of stored articles.

Each column 118 contains multiple storage cells 120, which hold at least one receptacle 122 for storing articles. The cells 120 are stacked at different heights along Z. The lowest storage cell 199 is raised above ground level, creating a clearance space 123 beneath the racks 114 for movement.

At ground level, passages Pi run along X2 through the clearance space 123, allowing robotic retrieval units to move. AGV 130 navigate the passages Pi to retrieve and transport articles from the receptacles 122. They can access specific positions within an aisle Ai without traveling its full length, improving efficiency.

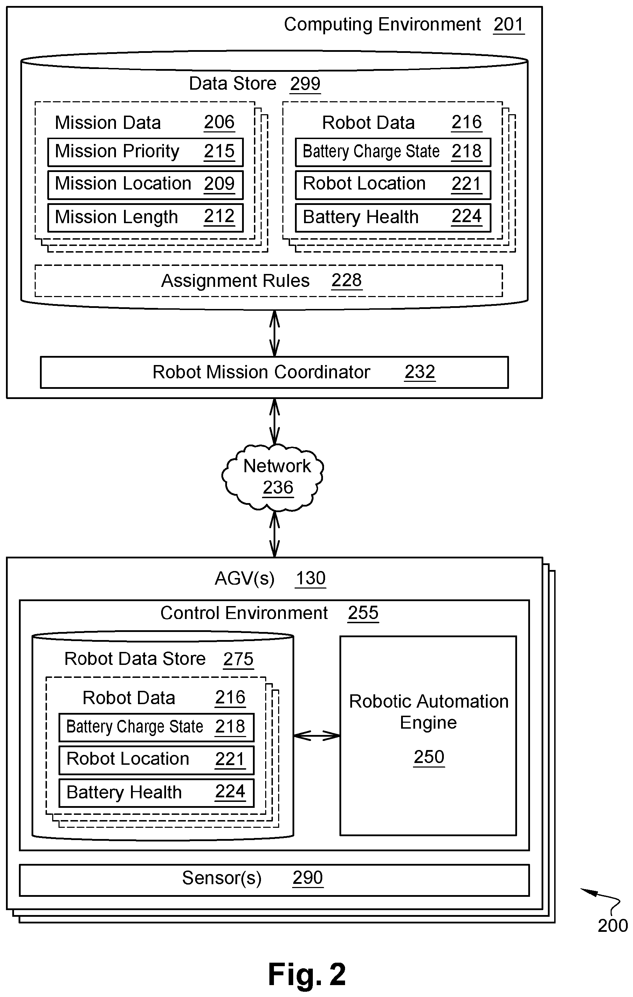

FIG. 2 is a schematic block diagram of a networked environment 200 that facilitates data communication and control of AGV 130 within a material handling facility.

FIG. 2 shows the networked environment 200, where a computing environment 201 communicates with AGVs 130 via a network 236, which may include wired, wireless, satellite, or any combination thereof. The computing environment 201 manages mission assignments and operations of the AGVs 130. It can be a server system or a distributed computing setup that adjusts resources based on demand.

The computing environment 201 executes, among other operations, a robot mission coordinator 232, which assigns missions to AGVs 130. Mission-related data are stored in a data store 299, which may use databases, cloud storage, or a combination of solid-state drives (SSDs) and hard disk drives (HDDs). The data store 299 also contains assignment rules 228, which include models and algorithms to optimize mission assignment.

During assigning missions to the AGVs 130, the robot mission coordinator 232 may consider various factors, for example, without being exhaustive, battery charge state 218, robot location 221, mission location 209, mission priority 215, mission length 212, speed, and task status to optimize the allocation of AGVs 130. The robot mission coordinator 232 analyzes robot data 216 and mission data 206 to select the most suitable AGV for each mission, balancing resource use and performance.

The robot mission coordinator 232 evaluates all available missions and AGVs, using a scoring system based on past data and mission parameters. A mission may be assigned to the top-ranked AGV by the robot mission coordinator 232 after evaluating all the available AGVs based on their assessment scores. The coordinator 232 sends missions to AGVs 130 and continuously updates assignments based on real-time robot data 216 and mission progress.

Each AGV 130 is equipped with onboard sensors 290, which may include cameras, radar, LiDAR, optical sensors, weight sensors, position encoders, and additional feedback mechanisms. The sensors 290 provide real-time environmental data, which is processed by a control environment 255 embedded within the vehicle.

The control environment 255 serves as the onboard processing system for AGVs 130. It is responsible for executing commands, processing sensor feedback, and directing vehicle movements. The control environment 255 may be implemented as an embedded control system within the AGV 130, a programmable logic controller (PLC), or a hybrid system that incorporates both onboard and remote processing capabilities. It interacts with the computing environment 201 through wired or wireless communication interfaces.

The control environment 255 includes a robot data store 275, which maintains operational data for the autonomous vehicle 130. This dataset may include robot data 216, route information, sensor readings, and performance telemetry. The robot data store 275 supports decision-making processes for navigation, obstacle avoidance, and system diagnostics.

Within the control environment 255, the robotic automation engine 250 processes data from the robot data store 275 and executes decision-making algorithms for autonomous movement. The robotic automation engine 250 may utilize computer vision models, LiDAR-based object detection, and real-time mapping algorithms to enable autonomous navigation. It also directs AGV 130 to engage with load handlers, retrieve articles, and transport them to designated locations. Upon completing a task, the robotic automation engine 250 may reassign the autonomous vehicle 130 to a new mission or instruct it to move to a designated waiting area.

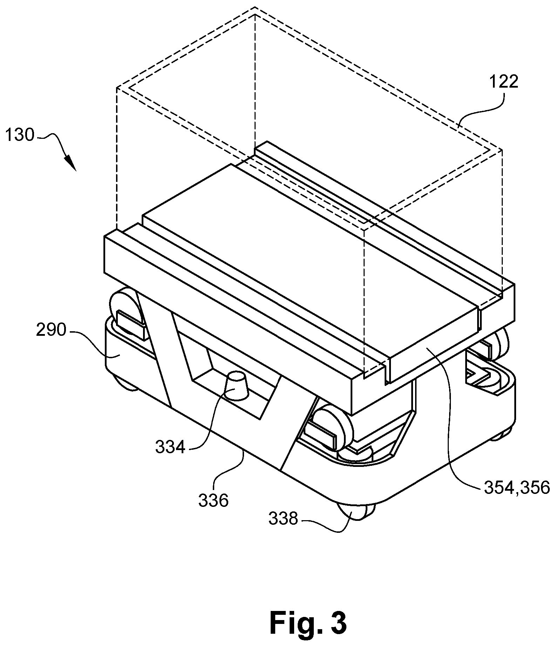

FIG. 3 illustrates an exemplary configuration of an autonomous guided vehicle (AGV) 130. The AGV 130 comprises a chassis 336 that provides structural support and mobility. The AGV 130 includes a guidance system 334 configured to enable navigation of the AGV within the warehouse environment 100. The guidance system 334 may employ various navigation methods, including optical, infrared, or other suitable technologies. The guidance system 334 may also include tracking means to follow designated routes within the warehouse environment 100.

The AGV 130 includes rolling means 338 to facilitate ground movement. These rolling means may consist of wheels or similar rolling components, configured to ensure stable movement across the warehouse environment 100. For vertical movement and accessing elevated storage positions, the AGV 130 may include a vertical movement mechanism (not depicted). This mechanism facilitates upward and downward mobility along the uprights 116 of the storage racks 114. The specific configuration of the vertical mobility system may vary based on the warehouse environment 100 and storage system design.

To handle the receptacles 122, the AGV 130 may be equipped with gripping means, for example, a translating arm 354, 356, capable of securely engaging and holding the receptacles 122.

The AGV 130 may include integrated sensors 290 to monitor real-time environmental conditions, vehicle status, and the positions of receptacles. These sensors may include optical, LiDAR, or other sensory technologies, ensuring precise data collection and autonomous operation.

The AGV 130 may be equipped with control electronics (not depicted) to process data from onboard sensors, calculate optimal routes, and communicate with the central management system.

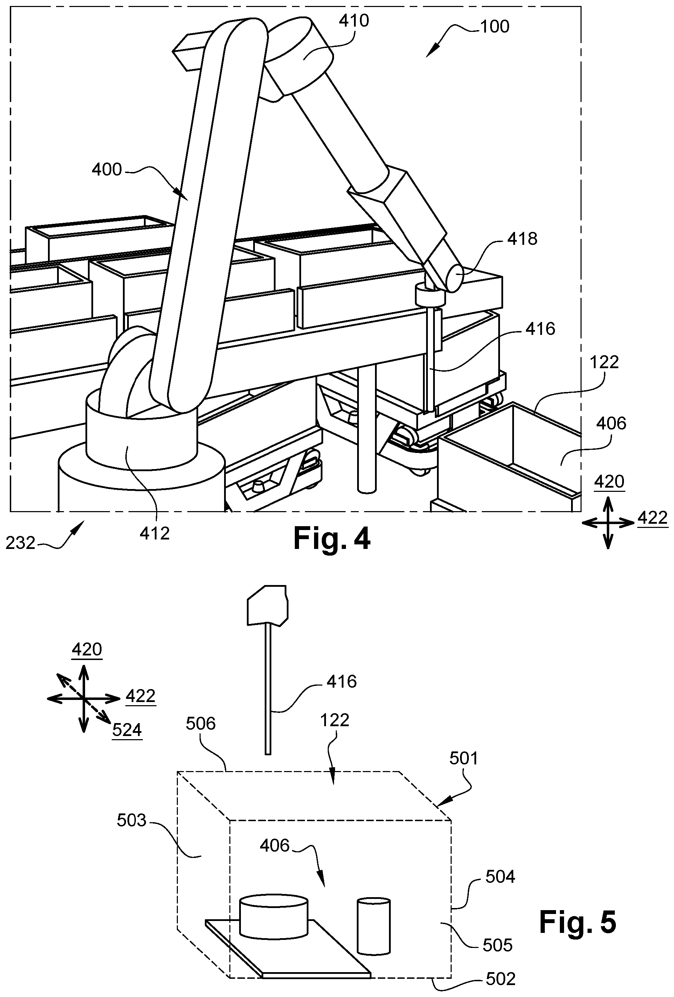

FIG. 4 illustrates an exemplary robotic arm 400, configured for performing pick-and-place operations within a warehouse environment 100.

A pick-and-place operation may involve a robotic arm 400, installed at a preparation station, retrieving articles 406 from a container 112 transported by an AGV 130. The robotic arm 400 is configured to grasp one or more articles 406 using a manipulator 410, and move the one or more articles 406 outside the container 112, for example in the context of preparing an order.

The robotic arm 400 comprises a manipulator 410, which is configured to execute movements necessary for grasping and placing articles 406. The manipulator 410 is supported by a base 412.

The manipulator 410 terminates at an end effector 416, which is designed to grasp and manipulate articles 406. The end effector 416 may include various tools, such as a vacuum-based gripper, that enable secure handling of articles 406 during transport. The manipulator 410 is capable of adjusting the position and orientation of the end effector 416 to accommodate the shape, size, and position of the articles 406.

The robotic arm 400 may be equipped with a computer vision system 418. The computer vision system 418 may include one or more cameras, such as a three-dimensional (3D) point cloud camera, configured to detect and analyze the position, orientation, and physical characteristics of articles 406 within the receptacle 122. The computer vision system 418 may capture images along a first (transverse) direction 420 and a second (longitudinal) direction 422, enabling comprehensive analysis of the articles 406.

FIG. 5 illustrates an example of a picking operation involving the receptacle 122 and the end effector 416 of the robot arm 400. The end effector 416 may make attempts at grasping articles 406 located within the receptacle 122.

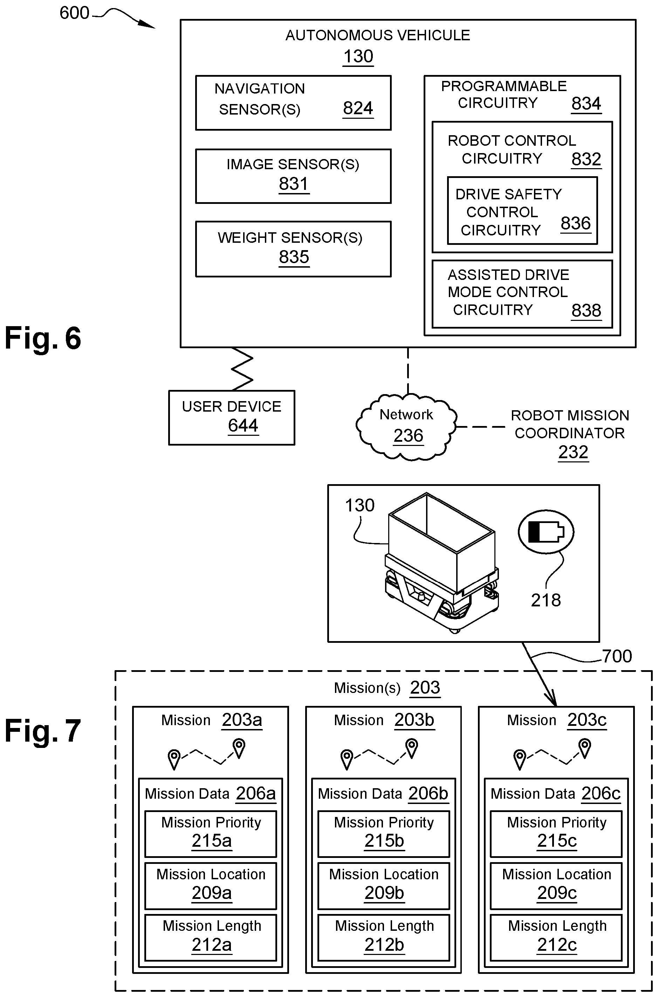

FIG. 6 illustrates an example system 600 for controlling the movement of an AGV 130, as introduced in FIG. 3, in accordance with the present disclosure.

The sensors 290 of the AGV 130 may include navigation sensors 624, which may include global positioning system (GPS) sensors, optical sensors, and other positioning technologies, configured to determine the AGV's location and orientation within the warehouse environment 100. Additionally, the sensors 290 of the AGV 130 may include image sensors 631 configured to capture visual data, which can be processed by the robot control circuitry 632 for object detection, path planning, and navigation. Additionally, the sensors 290 of the AGV 130 may include weight sensors 635 for measuring the weight of a load transported by the AGV 130.

The robot control circuitry 632 governs both autonomous navigation and manual operation of the AGV 130. The robot control circuitry 632 is implemented as part of the programmable circuitry 634, which processes data from the navigation sensors 624, image sensors 631, and weight sensors 635 to generate movement instructions. The robot control circuitry 632 is also responsible for coordinating the AGV's actions in response to commands received from the robot mission coordinator 232. The robot mission coordinator 232, as previously described, manages mission assignments and oversees AGV operations within the warehouse.

The AGV 130 is further equipped with drive safety control circuitry 636, which continuously monitors the surrounding environment for potential obstacles. Upon detecting an obstacle, the drive safety control circuitry 636 triggers the AGV 130 to perform avoidance maneuvers, thereby reducing the risk of collisions and maintaining safe operation.

The AGV 130 can operate in different drive modes, for example, autonomous mode, manual mode, and assisted drive mode. In autonomous mode, the robot control circuitry 632 independently navigates the AGV 130 to a designated location based on pre-programmed instructions or real-time data. In manual mode, the AGV 130 is physically pushed or pulled by a human operator. In assisted drive mode, the assisted drive mode control circuitry 638 supports the human operator's motion by generating supplementary motor power when the operator applies force to the AGV 130.

The AGV 130 communicates wirelessly with the robot mission coordinator 232 via the network 236, which may include wired, wireless, satellite, or a combination of these connections. The robot mission coordinator 232 continually updates mission assignments and operational parameters based on real-time data from the AGV 130, as described previously with reference to FIG.2. Additionally, human operators can interact with the AGV 130 via a user device 644, which may include handheld controllers, tablets, or other interfaces.

FIG. 7 illustrates an example of a robot mission assignment 700, where an AGV 130 is assigned to a particular mission 203a in accordance with various aspects of the embodiments of the present disclosure. In various examples, the AGV 130 may be part of a fleet capable of performing multiple missions 203 within warehouse environment 100. The AGV 130 is associated with robot data, which includes its current location 221, battery charge state 218, and other operational characteristics.

A mission 203 may correspond to a variety of tasks, such as the navigation to a specific cell containing a specific receptacle, picking an article from the receptacle, and transporting the article to a designated drop-off location etc.

At any given time, multiple missions may be pending. Each mission 203 is associated with mission data 206 (e.g., 206a, 206b, 206c), which includes various attributes defining that specific mission 203.

The mission data 206 may include a mission location 209 (e.g., 209a, 209b, 209c), indicating the starting point of the mission (e.g., where an inventory article or load handler is currently stored). The mission data 206 may further include a mission length 212 (e.g., 212a, 212b, 212c), which specifies the distance from the starting location to the destination of the mission. For example, a short mission 203 may involve a 30-foot transport, whereas a long mission 203 may require travel over 1000 feet. Additionally, the mission data 206 includes a mission priority 215 (e.g., 215a, 215b, 215c), which assigns a priority value indicating the importance and urgency of completing a mission 203 relative to other pending tasks.

In the example of FIG. 7, the mission assignment 700 is determined by analyzing the robot data 216 of the AGV 130, and the mission data 206 of the available missions 203. The goal is to optimize utilization of AGVs and increase productivity.

In selecting the optimal robot mission assignment 700, multiple factors may be considered, including battery charge state 218, current robot location 221, mission location 209, mission priority 215, mission length 212, estimated mission completion time, load time and unload time, number of passing or stop events along the route, deceleration capability of the robot, speed and task capabilities of the robot, current task status, and robot battery health 224.

One or more of these factors may be calculated or estimated using historical data, and real-time observations from sensors 290. A weighted scoring system may be used, where numerical weights are assigned to different factors. A score is then calculated for each possible robot mission assignment, and the assignment 700 with the highest score is selected.

The three example mission instances 203a, 203b, and 203c represent different tasks that an AGV 130 may be assigned within the warehouse environment 100. As an example, mission 203a may be associated with a mission location 209a at a storage area designated for lightweight articles. It may have a mission length 212a of 40 feet and a mission priority 215a classified as high. This mission may involve retrieving lightweight, high-priority articles that need to be transported quickly to a processing or dispatch area.

In the example depicted in FIG. 7, the autonomous vehicle 130 has a low battery charge state 218 but is still assigned to mission 203c. This decision is based on an analysis of factors such as the remaining battery capacity, the length of the mission, and the priority level. The robot mission coordinator 232 in this example determines that mission 203c can be completed within the available battery capacity, allowing the AGV to perform the task before needing to return to a charging station.

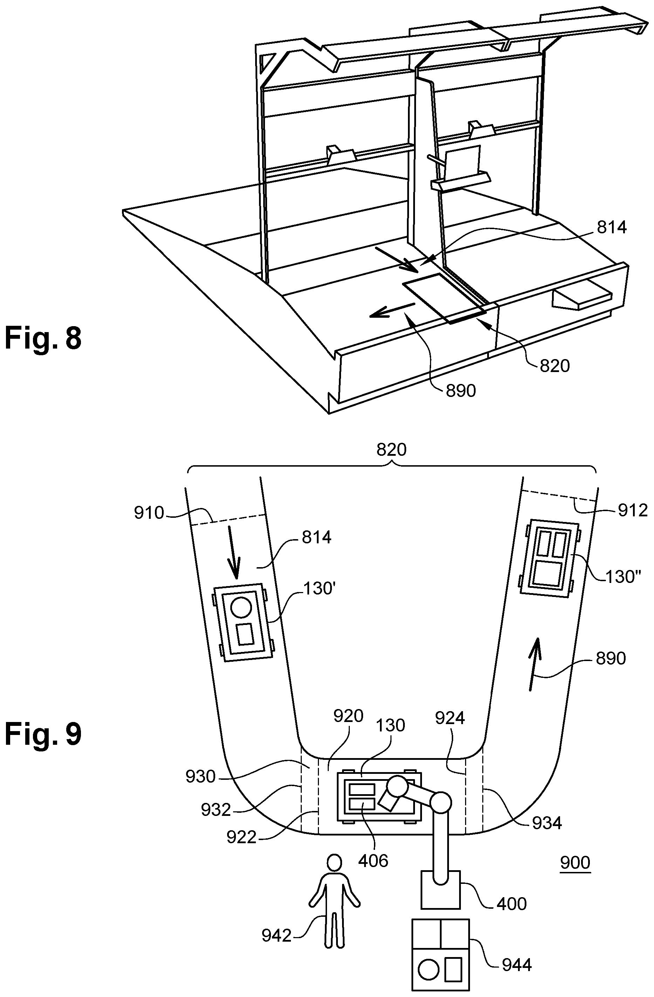

FIG. 8 illustrates an example of a workstation 820 configured for AGV operations within a warehouse environment 100. The workstation 820 may also be referred to as the preparation station 820. The workstation 820 comprises a weight sensing area and a scale (not depicted) integrated into the weight sensing area. The scale is configured to measure the weight of the AGV and its load during pick-and-place operations during a mission. Without being limitative, an example of such a scale may be the PBA757 by METTLER^{®}. In this context, "pick-and-place operations" refers to a process of retrieving one or more articles from a container (such as a receptacle) and transferring them to a different container (such as a shipment package) within a warehouse environment. The "pick-and-place operation" may be executed either by a human operator and/or by a robot arm, such as the robot arm 400.

The workstation 820 features a designated area 814 which may, in some embodiments, take the form of an incoming path 814, along which the AGV 130 moves when approaching the workstation. It should be understood that the shape and configuration of the designated area 814 is not limitative. The designated area 814 may refer to any surface which is configured and adapted to allow circulation of one or more AGVs. In the example illustrated at FIG. 8, theAGV 130 follows the incoming path 814 to enter the workstation 820, positioning itself for pick-and-place operations and weight measurement. In some embodiments, the weight of the AGV can be measured by the scale while the AGV is on the move. During the time the scale measures the weight, the robot arm 400 or a human operator would complete the pick-and-place operations. As such, there is no need for the AGV to halt for weight measurement. In some embodiments, the AGV 130 may halt if the pick or place operation requires more time, and hence requires the AGV 130 to halt completely. In some embodiments, the AGV 130 may be instructed to slow down and/or come to a halt by the robot mission coordinator 232, in order to increase the accuracy of the weight measurement operation.

The outgoing path 890 represents the route taken by the AGV 130 when leaving the workstation 820 after completing the pick or place operation, and the weight measurement.

It should be noted that although the two paths 814 and 890 shown in FIG. 8 are different and are depicted as perpendicular to each other, this configuration is merely an example. Depending on implementations, the incoming path and outgoing path may be the same, meaning the AGV can return along the same path it used to enter the workstation. Alternatively, the paths may be different, with varying angles, including U-shaped configurations or other geometric arrangements. An example of such alternative path is illustrated at FIG. 9.

The process of measuring the weight of the AGV 130 will now be described in detail with reference to FIG. 9.

FIG. 9 illustrates an example scenario involving three AGVs (130, 130', 130") arriving at the workstation 820 for weight measurement and to perform pick-and-place operations. The pick-and-place operations can either be performed by the respective robotic arms (for example, robotic arm 400) and /or human operators 942.

The workstation 820 comprises an incoming path 814, an outgoing path 890, and a pickup station 920 located within the workstation. The workstation 820 serves as an area within the warehouse environment 100 where AGVs undergo weight measurement and pick-and-place operations. The pickup station 920 within the workstation 820 is designated for loading or unloading articles as part of the pick-and-place operations, where either robotic arms (such as robotic arm 400) and/or human operators 942 handle the articles. In this specific example, three AGVs 130, 130', and 130" are shown arriving at the workstation 820 (AGVs 130, 130') and leaving the workstation 820 (AGV 130"). These AGVs and the robot arm 400 can be implemented based on the configurations described with reference to FIGS. 3 and 4.

In this specific example, the AGVs 130, 130', and 130" have been assigned missions by the robot mission coordinator 232 in order to fulfill a customer's order, which requires shipment of articles from the warehouse. Solely for the purpose of illustration, and without implying any limitation, it may be assumed that the customer's order requires the shipment and packaging of three articles - a tennis racket, a tennis ball, and a pair of socks.

The robot mission coordinator 232, as illustrated in FIG. 2, assigns each AGV to a mission. For instance, the robot mission coordinator 232 may assign AGV 130' to transport the pair of socks to the pickup station 920 based on the mission data, which may include mission location, mission length, and mission priority, as previously described with reference to FIG. 7. The selection of the AGV 130' for the task may involve analyzing factors such as battery charge state, current location, and the priority of the mission. For example, the robot mission coordinator 232 may assign AGV 130' to transport the pair of socks because it is located closest to the designated storage area for lightweight articles. The robot control circuitry 632 (as described in FIG. 6) processes navigation data from sensors 624 and 631 to guide the AGVs along the designated paths.

In a similar fashion, the robot mission coordinator 232 may assign AGVs 130 and 130" to respectively transport the tennis ball and the tennis racket to the pickup station 920.

The workstation 820 comprises a pickup station 920 located between the two ends 910 and 912 of the workstation 820. The AGVs enter the workstation via the incoming path 814 and proceed through a weight sensing area. In this specific example, the two ends of the weight sensing area are designated as 932 and 934. Hence, in this example, the weight sensing area extends beyond the boundary of the pickup station 920, but is smaller than the boundary (marked by 910 and 912) of the workstation 820. This configuration is merely an example, and other setups are possible. For instance, in some implementations, the weight sensing area may span the entire workstation floor, from the start 910 to the end 912 of the workstation 820, while in other implementations, the weight sensing area may be positioned only under the pickup station 920, spanning the bounded by the numerals 922 and 924. In some other implementations, the weight sensing area may be placed at strategic points within the workstation 820.

The weight sensing area is equipped with a scale, such as the PBA757 by METTLER^{®}, configured to dynamically measure the weight of the AGV and its load. This dynamic weight measurement may help in maintaining operational efficiency, as an AGV 130 may not need to halt. In some embodiments, the AGV 130 may halt if the pick-and-place operation by the robot arm 400 or the human operator 942 requires additional time to complete.

As the AGV 130 crosses the boundary marked by 932 and enters the weight sensing area, the scale starts measuring the weight of the AGV 130 carrying the tennis ball, while the AGV 130 remains in motion. The measured weight data may be transferred to the robot mission coordinator 232 via the network 236 in real-time. The robot mission coordinator 232 may process the weight data to determine any weight changes over time, which could indicate a pick or place operation. As the AGV continues to move forward and enters the pickup station 920, either the robotic arm 400 or the human operator 942 performs the pick-and-place operation by transferring an article (in this example, the tennis ball) 406 from a receptacle 122 (depicted in FIGS. 1 and 3) of the AGV 130 to the package 944.

During pick-and-place operations, the robot mission coordinator 232 dynamically adjusts the AGV's operating parameters based on the obtained weight data. For example, if the pick operation requires more time than a predefined time period, the mission coordinator 232 may instruct the AGV 130 to slow down or briefly halt to facilitate accurate weight measurement. The AGV 130 may resume movement once the pick is completed. In some embodiments, the AGV 130 may be instructed by the robot mission coordinator 232 to slow down or come to a complete stop to enhance the accuracy of weight measurement. The maximum allowable halt duration may vary based on operational needs. In different embodiments, the maximum allowable halt duration may vary, for example, less than a second, less than 800 ms, less than 600 ms, less than 400 ms etc. The adjustment of speed of the AGV 130 during weight measurement is only one example of parameter adjustment. Other examples may include dynamically rerouting the AGV if the pick-and-place operation exceeds the expected duration, adjusting the tilt or pitch of the AGV 130 to ensure article stability during weight measurement, or repositioning the robotic arm 400 to reduce oscillations and improve sensor readings. Modifying the motion profile-such as fine-tuning acceleration, deceleration, or jerk parameters-may also contribute to more accurate measurements and smoother transitions. In some embodiments, the robot mission coordinator 232 may further optimize the sequence and timing of missions for the AGV 130 by taking into account the measured load weight, remaining battery life, and current traffic conditions within the warehouse. Additional strategies may include reallocating tasks to other AGVs in the vicinity, initiating predictive recharging cycles, or dynamically reprioritizing mission queues to prevent delays and reduce idle or unproductive time.

The weight measurement operation continues as long as the AGV 130 travels over the weight sensing area, allowing the robot mission coordinator 232 to detect changes in weight as the article 406 is picked from the receptacle 122 of the AGV 130 and placed into the package 944.

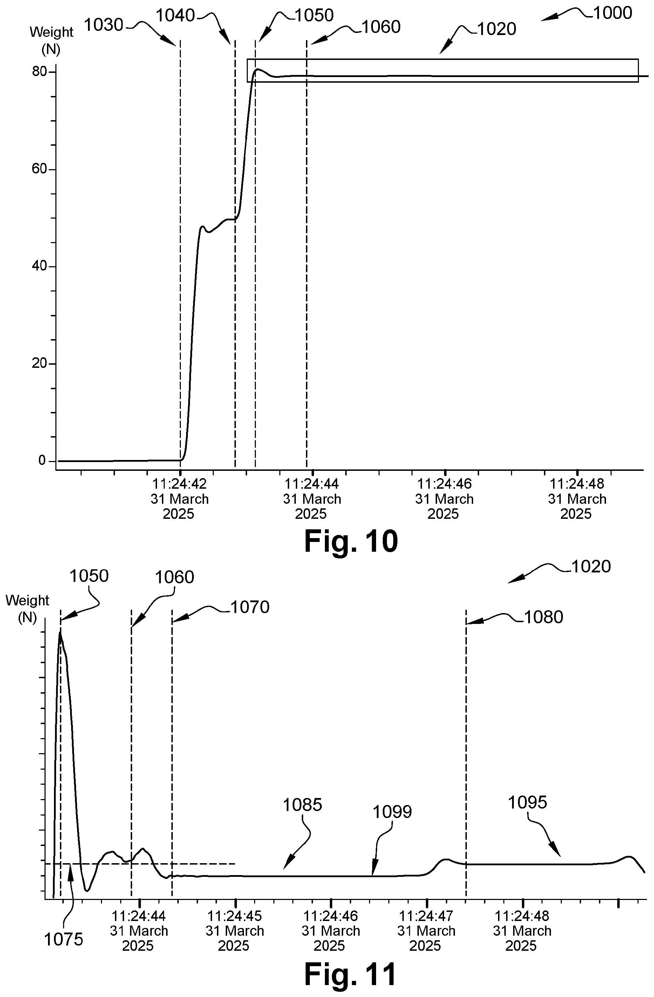

Based on the received weight data, the robot mission coordinator 232 may generate a weight dynamic oscillatory pattern equally referred to as a weight dynamic pattern. This pattern may facilitate the determination of whether a pick or place operation has been completed, even when the AGV remains in motion and/or even when the scale is still in an oscillatory mode, for example, further to the halt of the AGV. In some embodiments, a weight dynamic oscillatory pattern may refer to a time-dependant sequence or signal profile derived from weight sensor data over a period of time. The time-dependant sequence or signal profile may reflect the dynamic fluctuations over time - such as, for example, oscillations and/or vibrations-occurring during and/or after a pick or place operation - thereby defining a pattern. This pattern may be relied upon to infer certain events. As an example, such inferred events may include a completion of operations while the AGV 130 is still in motion and/or when the weight measurement system has not been fully stabilized. By analyzing characteristic features within the pattern, such as amplitude, frequency, or convergence behavior, the system may, for example, more accurately determine whether an article (or multiple articles) has been added or removed without requiring a full stop. A detailed description of an example weight dynamic oscillatory pattern shall be presented with reference to FIGS. 10 and 11.

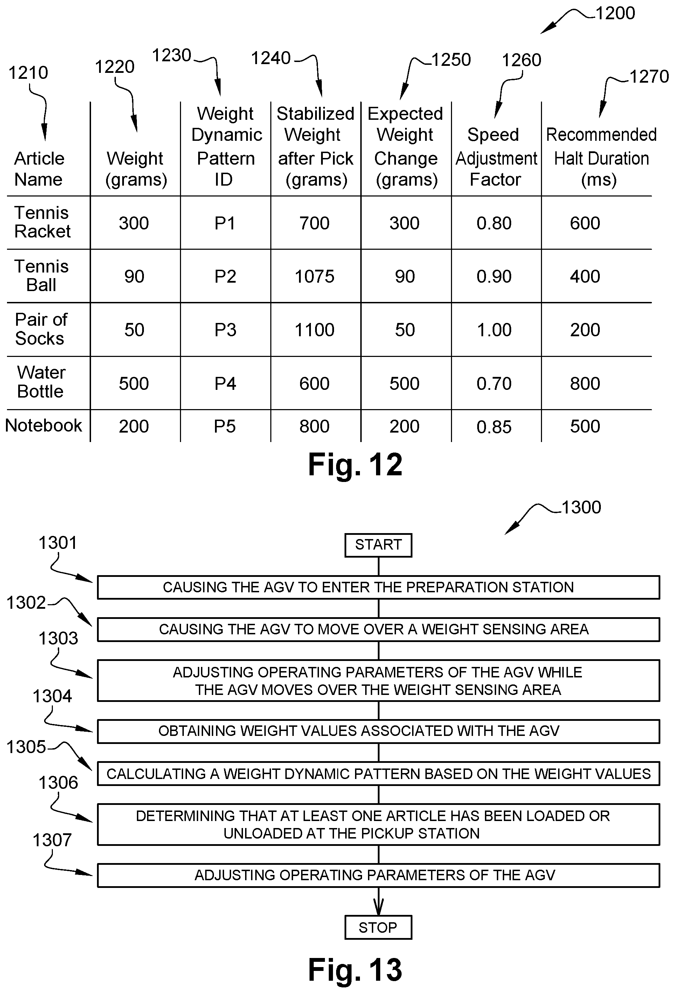

In some embodiments, the generated weight dynamic oscillatory pattern may be compared with entries from a database containing known weight characteristics. The database may include expected weights of different articles, weight of the AGV without any article, and the weights of various receptacles etc. Additionally, the database may store patterns associated with specific articles and adjustments that account for the AGV's speed when passing over the weight sensing area. By analyzing the comparison results, the robot mission coordinator 232 may determine whether an article has been successfully picked or placed, thereby enabling accurate tracking without requiring the AGV 130 to come to a complete stop. In some embodiments, the robot mission coordinator 232 may determine that an operator has accidentally loaded or unloaded too many or too few articles and prompt the AGV 130 to halt until proper correction has been conducted. A detailed description of an example database shall be presented with reference to FIG. 12.

FIG. 10 illustrates an example weight dynamic oscillatory pattern 1000 obtained during the passage of an AGV 130 over a weight sensing area of a workstation 820, as introduced with reference to FIGS. 8 and 9. The weight dynamic oscillatory pattern 1000 depicts the variation of the measured weight (y-axis) over time (x-axis), as recorded during a pick-and-place operation performed by the robotic arm 400 or by the human operator 942.

As the AGV 130 enters the sensing zone, the weight increases progressively due to the transfer of load from the front to the rear of the vehicle. Once the AGV 130 reaches the center of the scale, the measurement typically stabilizes, reflecting a total load it carries at this moment. This stabilizing phase offers an opportunity to assess the current payload with higher accuracy. If a pick or place operation is initiated while the AGV is on the scale, small but characteristic variations may appear in the weight signal, such as brief drops or increases, followed by a new stable value. By analyzing these patterns in real time or near-real time, the system may detect whether an article was added or removed, determine its weight, and confirm the operation without requiring the AGV 130 to stop. These dynamic weight signatures may enable precise monitoring of handling operations during continuous motion, improving throughput while maintaining traceability and operational control.

The weight dynamic oscillatory pattern 1000, as depicted in FIG. 10, exemplifies how transient weight changes can be recorded during the continuous movement of an AGV through the weight sensing area, providing data for detecting pick-and-place operations. Such patterns may be analyzed by the robot mission coordinator 232 to identify whether a pick or place event has occurred.

In the specific example shown in FIG. 10, the weight dynamic oscillatory pattern 1000 exhibits a series of distinct phases marked by distinct moments in time. Solely for the purpose of explanation, and without implying any limitation, it may be assumed that the pattern 1000 corresponds to an AGV equipped with a pair of front wheels and a pair of back wheels. At the moment in time labeled 1030, the front wheels of the AGV arrive at the starting boundary 932 of the weight sensing area (as depicted in FIG. 9). This event causes a sudden increase in the measured weight, indicating the initial contact between the AGV and the weight sensing area. Due to the forward motion of the AGV, the weight increases rapidly as the front wheels transfer their load onto the scale in the weight sensing area.

Subsequently, at the moment in time labeled 1040, the back wheels of the AGV 130 arrive at the starting boundary 932 of the weight sensing area (as depicted in FIG. 9), indicating that the entire AGV is now positioned on the scale, exerting force across its full length. As the AGV continues to move toward the center of the weight sensing area, the weight recorded by the scale continues to increase rapidly (as illustrated by the segment between the moments labeled 1040 and 1050). This increase can be attributed to the gradual transfer of the AGV's weight toward the center of the weight sensing area as a result of its forward motion.

At the moment in time labeled 1050, the AGV reaches the center of the weight sensing area, which may correspond to the center of the pickup station 920 in some implementations, as depicted in FIG. 9. At this stage, the weight measurement stabilizes as the AGV's entire load is evenly distributed on the scale. The stabilized weight may help in accurately determining the load carried by the AGV, particularly before performing a pick or place operation.

As the AGV continues moving forward, at the moment labeled 1060, the robotic arm 400 or a human operator 942 may initiate the pick-and-place operation by removing an article 406 from the receptacle 122 of the AGV. The area marked as 1020 in FIG. 10 represents a zoomed-in portion of the pattern 1000, highlighting the portion of the pattern 1000 that starts around moment 1050, i.e., the moment when the AGV reaches the center of the scale. This zoomed-in area 1020 will be further described with reference to FIG. 11.

FIG. 11 illustrates a zoomed-in area of the weight dynamic oscillation pattern 1000, previously depicted in FIG. 10. This zoomed-in area, labeled 1020, provides a more detailed view of the pattern 1000 after the AGV reaches the center of the scale at moment 1050.

Fig 11 shows a typical weight dynamic oscillatory pattern. The example reflects how the measured weight of an AGV may change over time during a pick-or-place operation. When an article is picked from the AGV, the weight signal typically shows a brief decrease as the lifting action begin, followed by a short rebound, and then stabilizes at a lower value. This sequence may indicate that an item has been successfully removed. Conversely, a loading operation may be characterized by an increase in the measured weight, stabilizing at a higher value. By comparing the stabilized weight before and after the operation, the system may determine whether an item was picked or placed and even estimate the item's weight. These patterns may allow the system to confirm pick-and-place events in real time or in near-real time, without requiring full stop / mechanical stillness, and may be used to trigger decisions such as resuming movement, validating task completion or adjusting future mission planning.

The weight indicated by the numeral 1075 represents a horizontal line reflective of the anticipated weight if no pick or no load occurs. That is, 1075 represents the expected stable weight of the AGV 130 over time when no articles are picked or removed, serving as a baseline reference to detect any deviations when a pick operation takes place.

At the moment labeled 1060, the initiation of the pick-and-place operation occurs. Specifically, this marks the moment at which the robotic arm 400 or the human operator 942 begins to lift the article 406 from the receptacle 122. As can be seen in FIG. 11, just before the moment 1060, the measured weight briefly decreases. This decrease in weight occurs because, during the initial phase of lifting the article 406, the upward force applied by the robotic arm or the human operator momentarily lessens the load that the AGV exerts on the scale. Immediately after the upward force due to the lifting the article 406 ceases to exist, the weight may increase briefly again before stabilizing to a level indicated by 1099.

Therefore, 1060 represents the moment of initiation of the picking operation, characterized by a brief decrease followed by a brief increase in the measured weight.

After the initiation of the pick-and-place operation at moment 1060, the weight stabilizes at a lower value indicated by 1099 at the moment labeled 1070. This stabilization signifies that the AGV has reached a new steady state after the removal of an article. Therefore, the moment labeled 1070 corresponds to the successful removal of an article from the AGV by the robotic arm or the human operator. This decrease in weight confirms that a pick operation has occurred, where the article 406 has been successfully lifted from the receptacle of the AGV.

The weight value labeled 1075 represents the anticipated stable weight of the AGV when no pick operation takes place. It serves as a baseline reference to detect deviations during pick-and-place operations. Any reduction from this anticipated weight indicates that an article has been picked from the AGV. Therefore, the anticipated weight 1075 functions as a benchmark for identifying successful pick events by detecting discrepancies between the expected and actual weight values.

The weight value labeled 1085 represents the difference between the anticipated stable weight 1075 and the stabilized weight 1099 after an article has been picked and removed. The value 1085 quantitatively captures the weight change resulting from the pick operation. The calculation of the weight value 1085 involves subtracting the stabilized weight 1099 (recorded after the pick) from the anticipated stable weight 1075, which would have been maintained if no pick had occurred. This difference 1085 equals the weight of the removed article.

The moment labeled 1080 represents an instance where a loading operation is detected. Unlike moment 1070, which indicates a pick, the weight at moment 1080 increases to a stable level 1095, which matches the anticipated stable weight 1075 before any picking had occurred. This indicates that an article with the same weight as the previously picked article has been loaded onto the AGV 130, restoring the total weight to the level 1075.

To obtain the weight dynamic oscillatory pattern 1000 depicted in FIG. 10, a specific measurement protocol may be followed. In one example embodiment, the weight measurement operation may involve utilizing an AGV carrying a receptacle, which includes articles of varying weights, including a specific article weighing approximately 90 grams (±5 grams).

During the measurement operation, the AGV 130 is instructed by the robot mission coordinator 232 to enter the workstation 820 along the designated path (for example, incoming path 814 as shown in FIG. 9) and move over the weight sensing area. The measurement protocol may specify that the AGV's first pick be performed less than one second after arriving at the pickup station 920. This rapid initiation of the pick ensures that the weight change due to the article's removal is detected during the stabilization phase.

The robot mission coordinator 232, which continuously receives the weight data via the network 236, may process the measured weight values in real time and generate the pattern 1000. In some embodiments, the AGV may briefly reduce speed or come to a complete halt if the pattern indicates that a accurate weight measurement requires additional time or if the pick-and-place operation needs more time to complete.

In some embodiments, the weight dynamic oscillatory pattern 1000 may be predicted and/or optimized using machine learning techniques known in the art. For example, a machine learning algorithm may be trained on historical weight variation data obtained from AGVs moving over the weight sensing area under various operational conditions. The training data may include weight variations associated with different speeds, acceleration or deceleration patterns, and loading or unloading events. Once trained, the algorithm may predict the expected weight dynamic pattern for a given operational scenario, allowing for detection of pick-and-place operations and adjustments to AGV parameters in real time.

FIG. 12 illustrates an example database 1200 comprising data entries associated with various articles that may be picked or loaded during pick-and-place operations. The database 1200 is configured to store data related to various articles, including their weights, weight dynamic pattern IDs, stabilized weights after pick, expected weight changes, speed adjustment factors, and recommended halt durations.

In the example of FIG. 12, a dedicated database stores reference data for various articles handled by the AGV 130, including their known weights, associated weight patterns, expected weight changes, and recommended movement parameters. By comparing real-time weight signals with these pre-recorded data or entries, the system may more accurately identify whether a pick or place operation has occurred. In some embodiments, the system may also adjust AGV speed or halts duration too ensure reliable measurements based on the article's characteristics.

Each entry in the database 1200 includes several parameters, which are labeled as follows: Article Name 1210 represents the name of the item to be picked or placed. Weight (grams) 1220 indicates the weight of the article before the pick or after the load. Weight Dynamic Pattern ID 1230 is a unique identifier corresponding to the weight dynamic oscillation pattern 1000, as described in FIGS. 10 and 11, associated with a specific article. Stabilized Weight after Pick

(grams) 1240 indicates the expected stable weight (corresponds to numeral 1075 in FIG. 11) of the AGV after the article has been picked. Expected Weight Change (grams) 1250 (corresponds to numeral 1085 in FIG. 11) represents the difference between the stable weight before and after the pick operation, quantifying the decrease in mass due to picking the article. Speed Adjustment Factor 1260 is a value used to dynamically adjust the speed of the AGV during weight measurement to optimize accuracy. Lower values indicate slower speeds, typically recommended for heavier articles. Recommended Halt Duration (ms) 1270 specifies the optimal time duration for which the AGV may be halted during pick-and-place operations.

By comparing the real-time weight dynamic oscillation pattern 1000 with the pre-stored data in the database 1200, the robot mission coordinator 232 can detect whether an article has been picked from or placed into the receptacle of the AGV. Specifically, the coordinator 232 analyzes the measured weight changes and stabilized weights to determine if the observed pattern corresponds to a pick operation (e.g, an unloading event) or a place operation (e.g., a loading event).

FIG. 13 is a scheme-block illustration of a method 1300 executed, for example and without being limitative, by the robot mission coordinator of the computing environment of FIG. 2, in accordance with at least some non-limiting embodiments of the present technology.

In the example of FIG. 13 a scheme block illustrates a method 1300 aiming at guiding the AGV 130 through a preparation station, adjusting its speed for accurate weight measurement, and recording weight data. The data is analyzed to generate a dynamic weight pattern which helps identify if an item has been picked or placed. The system then may adjust the AGV's parameters and may operate the AGV 130 according to the adjusted parameters.

The method 1300 starts at operation 1301 with causing the AGV to enter the preparation station. For example, the robot mission coordinator 232 may perform this operation by issuing navigation commands to the AGV 130. The AGV 130 may navigate toward the preparation station based on pre-calculated routes, utilizing navigation sensors 624 to track its current location and orientation. The assignment of the preparation station may be based on the mission data (as described in FIG. 7), which includes mission location, priority, and length.

The method 1300 continues at operation 1302 with causing the AGV to move over a weight sensing area. For example, the robot control circuitry 632 may direct the AGV 130 to move along the designated path that passes over the weight sensing area, such as the area between boundaries 932 and 934 (as illustrated in FIG. 9). The AGV 130 may maintain a predefined speed during this movement, as dynamic weight measurement accuracy may depend on maintaining stable motion. The speed may be dynamically adjusted based on real-time feedback from sensors.

The method 1300 continues at operation 1303 with adjusting operating parameters of the AGV while the AGV moves over the weight sensing area. For example, the robot mission coordinator 232 may adjust the speed, acceleration, or deceleration of the AGV 130 based on real-time data to optimize the accuracy of weight measurement. Adjustments may include reducing speed when approaching the weight sensing area to minimize oscillations or, in some cases, temporarily halting the AGV if the pick-and-place operation requires additional time. These adjustments may correspond to speed adjustment factors, as depicted in FIG. 12.

The method 1300 continues at operation 1304 with obtaining weight values associated with the AGV. For example, the scale embedded in the weight sensing area (such as PBA757 by METTLERO) may continuously record the weight of the AGV while it is in motion. The obtained weight data may be transmitted in real-time to the robot mission coordinator 232 via the network 236. The data may include weight variations resulting from dynamic conditions as the AGV moves through the sensing area (as depicted in FIG. 10).

The method 1300 continues at operation 1305 with calculating a weight dynamic pattern based on the weight values. For example, the robot mission coordinator 232 may analyze the obtained weight data to generate a weight dynamic oscillatory pattern (as shown in FIG. 11). The pattern may reflect variations due to movement, pick, or place operations, and can be generated using algorithms trained to detect characteristic oscillation profiles corresponding to loading or unloading events.

The method 1300 continues at operation 1306 with determining that at least one article has been loaded or unloaded at the pickup station. For example, the robot mission coordinator 232 may compare the generated weight dynamic pattern with data stored in a database (such as the one shown in FIG. 12) to identify whether the weight change matches a known profile corresponding to a specific article. If a match is detected, the system may determine that a pick or place operation has occurred. In some embodiments, the system may determine that multiple picks or multiple places have occurred and may verify a total mass picked or placed and therefore may verify a quantity of articles picked and/or placed.

The method 1300 ends at operation 1307 with adjusting operating parameters of the AGV. For example, the robot mission coordinator 232 may validate that the AGV can leave the preparation station.

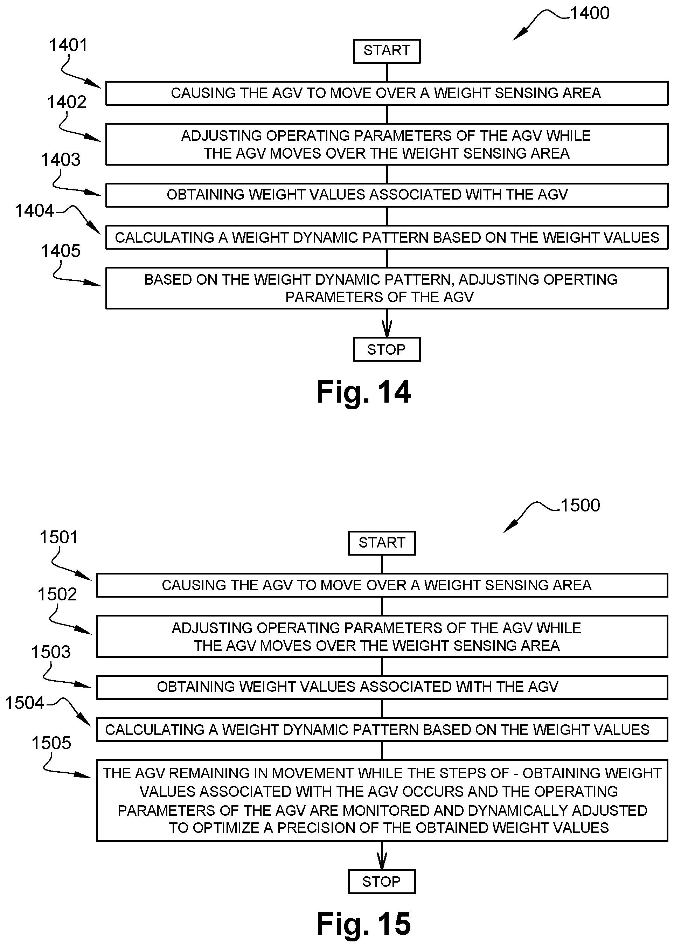

FIG. 14 is a scheme-block illustration of a method 1400 executed, for example and without being limitative, by the robot mission coordinator 232 of the computing environment 201 of FIG. 2, in accordance with at least some non-limiting embodiments of the present technology.

In the example of FIG. 14 a block diagram illustrating a method 1400 executed by the robot mission coordinator 232 is shown. The method starts with the AGV 130 moving over a weight sensing area while maintaining controlled speed for accurate weight measurement. The robot mission coordinator then adjusts the AGV's speed or acceleration to optimize measurement accuracy, reducing speed or halting briefly as needed. The AGV's weight may be continuously recorded and transmitted in real-time or near-real time, and a dynamic weight pattern may be generated. Based on the pattern, the operating parameters of AGV may be adjusted, such as modifying speed or movement to ensure precise pick-and-place operations.

The method 1400 starts at operation 1401 with causing the AGV to move over a weight sensing area. For example, the robot mission coordinator 232 may instruct the AGV 130 to move along a designated path that includes a weight sensing area, such as the area between boundaries 932 and 934 (as shown in FIG. 9). The AGV may maintain a controlled speed to optimize the accuracy of the weight measurement.

The method 1400 continues at operation 1402 with adjusting operating parameters of the AGV while the AGV moves over the weight sensing area. For example, the robot mission coordinator 232 may adjust the speed or acceleration of the AGV 130 to maintain stability during the weight measurement process. Such adjustments can include reducing the speed when entering the sensing area to minimize oscillations, or briefly halting if required for a more precise measurement, as discussed in FIG. 12. For example, the robot mission coordinator 232 may adjust the movement profile of the AGV 130 based on real-time weight data, such as modifying the tilt angle or damping oscillations to enhance measurement accuracy. These adjustments may be dynamically made based on feedback received from weight sensors.

The method 1400 continues at operation 1403 with obtaining weight values associated with the AGV. For example, the scale embedded in the weight sensing area (such as the PBA757 by METTLER^{®}) continuously measures the AGV's weight as it traverses the sensing area. The obtained weight data may be transmitted to the robot mission coordinator 232 over the network 236, enabling real-time monitoring.

The method 1400 continues at operation 1404 with calculating a weight dynamic pattern based on the weight values. For example, the robot mission coordinator 232 may process the obtained weight data to generate a weight dynamic oscillatory pattern. The pattern may be analyzed to identify characteristic variations indicative of a pick or place operation, using algorithms that recognize typical oscillation profiles associated with these events.

The method 1400 ends at operation 1405 with based on the weight dynamic pattern, adjusting operating parameters of the AGV. For example, the robot mission coordinator 232 may dynamically adjust the speed, movement path, or other operating conditions based on the analyzed pattern. Adjustments may include maintaining a slower speed if the pattern indicates ongoing pick-and-place operations or resuming a normal speed once stabilization is detected.

FIG. 15 is a scheme-block illustration of a method 1500 executed, for example and without being limitative, by the robot mission coordinator of the computing environment of FIG. 2, in accordance with at least some non-limiting embodiments of the present technology.

In the example of FIG. 15 a block diagram of a method 1500 is executed, for example by the robot mission coordinator 232. The method 1500 begins with the AGV 130 moving over a weight sensing area where it is controlled for weight measurement. The operating parameters of the AGV 130, such as speed, may be dynamically adjusted based on real-time or near-real time weight data. The AGV's weight may be continuously measured and transmitted for analysis. A weight dynamic pattern may then be generated, which may then be relied upon to detect pick or place operations. The AGV 130 may remain in motion while the weight values are obtained and operating parameters may be adjusted to optimize measurement precision.

The method 1500 starts at operation 1501 with causing the AGV to move over a weight sensing area. For example, the robot mission coordinator 232 may instruct the AGV 130 to move into the workstation 820 (as shown in FIG. 9) and position itself over the weight sensing area, which may span between boundaries 932 and 934. The AGV may move at a controlled speed to facilitate accurate weight measurement.

The method 1500 continues at operation 1502 with adjusting operating parameters of the AGV while the AGV moves over the weight sensing area. For example, the robot mission coordinator 232 may dynamically reduce the speed of the AGV 130 to minimize oscillations while entering the weight sensing area, or instruct the AGV to halt briefly if more stability is required. These adjustments may be influenced by real-time weight data obtained from sensors embedded in the scale.

The method 1500 continues at operation 1503 with obtaining weight values associated with the AGV. For example, as the AGV 130 moves through the weight sensing area, the scale, such as a PBA757 by METTLER^{®}, measures the weight and continuously transmits data to the robot mission coordinator 232 via the network 236 for analysis.

The method 1500 continues at operation 1504 with calculating a weight dynamic pattern based on the weight values. For example, the robot mission coordinator 232 processes the acquired weight data to generate a weight dynamic oscillatory pattern (such as pattern 1000 shown in FIG. 10). This pattern helps identify variations indicative of a pick or place operation.

The method 1500 ends at operation 1505 with the AGV remaining in movement while the steps of obtaining weight values associated with the AGV occurs and the operating parameters of the AGV are monitored and dynamically adjusted to optimize a precision of the obtained weight values. For example, the robot mission coordinator 232 may continuously monitor the real-time weight data to ensure measurement precision, adjusting speed, acceleration, or other parameters as needed. This dynamic adjustment allows the AGV to maintain movement without significantly compromising the accuracy of weight detection.

It will be appreciated that at least some of the operations of the methods 1300, 1400, and 1500 may also be performed by computer programs, which may exist in a variety of forms, both active and inactive. Such as, the computer programs may exist as software program(s) comprised of program instructions in source code, object code, executable code or other formats. Any of the above may be embodied on a computer readable medium, which include storage devices and signals, in compressed or uncompressed form. Representative computer readable storage devices include conventional computer system RAM (random access memory), ROM (read only memory), EPROM (erasable, programmable ROM), EEPROM (electrically erasable, programmable ROM), and magnetic or optical disks or tapes. Representative computer readable signals, whether modulated using a carrier or not, are signals that a computer system hosting or running the computer program may be configured to access, including signals downloaded through the Internet or other networks. Concrete examples of the foregoing include distribution of the programs on a CD ROM or via Internet download. In a sense, the Internet itself, as an abstract entity, is a computer readable medium. The same is true of computer networks in general.

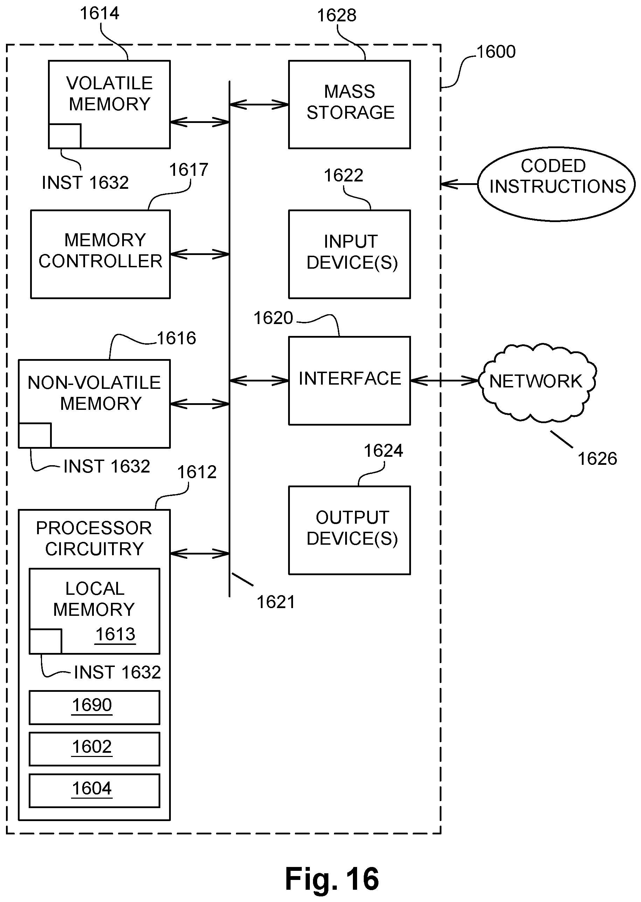

FIG. 16 is a block diagram of an example programmable circuitry platform 1600 structured to execute and/or instantiate machine-readable instructions to implement the present technology. The programmable circuitry platform 1600 can be implemented as a server (e.g., the computing environment 201), an AGV (e.g., the AGV 130), a scale, personal computer, embedded computing unit (e.g., a computing unit embedded in an AGV, a scale and/or a preparation station), workstation, mobile device such as a smartphone or tablet, self-learning system such as a neural network, Internet appliance, or any other type of computing and/or electronic device.

The programmable circuitry platform 1600 includes programmable circuitry 1612, which is hardware-based and may be implemented using one or more integrated circuits, logic circuits, field-programmable gate arrays (FPGAs), microprocessors, central processing units (CPUs), graphics processing units (GPUs), digital signal processors (DSPs), and/or microcontrollers. The programmable circuitry 1612 may be based on semiconductor technology, such as silicon-based processors.

The programmable circuitry 1612 includes local memory 1613, such as cache or registers, for rapid data storage and retrieval. It communicates with main memory 1614 and non-volatile memory 1616. The volatile memory 1614 may be implemented using Synchronous Dynamic Random Access Memory (SDRAM), Dynamic Random Access Memory (DRAM), RAMBUS^{®} Dynamic Random Access Memory (RDRAM^{®}), or other RAM-based storage technologies. The non-volatile memory 1616 may be implemented using flash memory, solid-state drives (SSDs), or other persistent storage devices.

A memory controller 1617 manages access to both volatile memory 1614 and non-volatile memory 1616. The memory controller 1617 may be an integrated circuit, logic circuit, or microcontroller responsible for directing data flow between memory components, ensuring efficient read and write operations.

The programmable circuitry platform 1600 also includes interface circuitry 1620, which enables communication between different components of the system. The interface circuitry 1620 may support multiple industry-standard communication interfaces, such as Ethernet, Universal Serial Bus (USB), Bluetooth^{®}, Near Field Communication (NFC), and Peripheral Component Interconnect (PCI/PCIe).

To enable user interaction, the interface circuitry 1620 connects to input devices 1622, which may include microphones, cameras, keyboards, touchscreens, buttons, trackpads, and voice recognition systems. The interface circuitry 1620 also connects to output devices 1624, such as display screens including LED, OLED, LCD, CRT, and IPS touchscreens, speakers, printers, or tactile feedback devices.

The interface circuitry 1620 further supports network communications via a communication device, which may include a transmitter, receiver, transceiver, modem, gateway, or network interface. This allows data exchange over network 1626, which may include Ethernet connections, DSL or telephone-based connections, coaxial cable systems, satellite-based communication systems, cellular networks, or optical networks.

The programmable circuitry platform 1600 also includes mass storage 1628, which is used to store firmware, software applications, and data. Examples of mass storage technologies include magnetic storage devices such as hard disk drives (HDDs) and floppy disks, optical storage devices such as Blu-ray discs, CDs, and DVDs, RAID systems for fault-tolerant data storage, and solid-state storage such as flash memory and SSDs.

Communication between the various components of the programmable circuitry platform 1600 may be enabled by one or more internal and/or external buses 1621 (e.g. a PCI bus, universal serial bus, IEEE 1394 "Firewire" bus, SCSI bus, Serial-ATA bus, ARINC bus, etc.), to which the various hardware components are electronically coupled.

Machine-readable instructions 1632 may be stored in multiple locations, including mass storage 1628, volatile memory 1614, non-volatile memory 1616, or external media such as CDs, DVDs, and removable drives. These instructions 1632 enable the programmable circuitry 1612 to execute control algorithms, process data, and perform computations in accordance with the present disclosure.

While the above-described implementations have been described and shown with reference to particular steps performed in a particular order, it will be understood that these steps may be combined, sub-divided, or re-ordered without departing from the teachings of the present technology. At least some of the steps may be executed in parallel or in series. Accordingly, the order and grouping of the steps is not a limitation of the present technology.

It should be expressly understood that not all technical effects mentioned herein need to be enjoyed in each and every embodiment of the present technology. For example, embodiments of the present technology may be implemented without some of these technical effects, while other embodiments may be implemented with other technical effects or none at all.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A computer-implemented method for controlling an automated guided vehicle (AGV) (130) at a preparation station (820) extending along a designated area (814), the designated area (814) comprising a pickup station (920) allowing loading and unloading of articles (406) carried by the AGV (130), the method comprising:
- causing the AGV (130) to enter the preparation station (820);
- causing the AGV (130) to move over a weight sensing area (932, 934);
- adjusting operating parameters of the AGV (130) while the AGV (130) moves over the weight sensing area (932, 934);
- obtaining weight values associated with the AGV (130);
- calculating a weight dynamic pattern (1000) based on the weight values;
- determining, based on the weight dynamic pattern (1000), that at least one article (406) has been loaded or unloaded at the pickup station (920); and
- in response to the determination that the at least one article (406) has been loaded or unloaded at the pickup station (920), adjusting operating parameters of the AGV (130).

2. The method of claim 1, wherein adjusting operating parameters of the AGV (130) while the AGV (130) moves over the weight sensing area (932, 934) comprises reducing a speed of displacement of the AGV (130).

3. The method of claim 2, wherein reducing the speed of displacement of the AGV (130) comprises stopping displacement of the AGV (130) for a given period of time.

4. The method of any of claims 1 to 3, wherein adjusting operating parameters of the AGV (130) in response to the determination that the at least one article (406) has been loaded or unloaded at the pickup station (920) comprises allowing the AGV (130) to leave the preparation station (820).

5. The method of any of claims 1 to 4, wherein the AGV (130) remains in movement while obtaining weight values associated with the AGV (130) occur and the operating parameters of the AGV (130) are monitored and dynamically adjusted to optimize a precision of the weight values.

6. The method of any of claims 1 to 5, wherein calculating the weight dynamic pattern (1000) comprises executing a dynamic analysis of the weight values that accounts for a speed and/or a load configuration of the AGV (130).

7. The method of claims 1 to 6, wherein the weight dynamic pattern (1000) is predicted by a machine-learning algorithm (MLA) that has been trained on weight variation patterns of objects moving over the weight sensing area (932, 934), the weight variation patterns being reflective of an acceleration and/or a deceleration of the AGV (130) while passing over the weight sensing area (932, 934).

8. The method of any of claims 1 to 7, wherein determining that at least one article (406) has been loaded or unloaded at the pickup station (920) comprises comparing the weight dynamic pattern (1000) with entries of a database (1200) comprising at least one of weights associated with articles (406), weight dynamic patterns associated with articles (406), weights of the AGV (130) without a load, weights of containers (122) configured to be carried by the AGV (130), and/or weight adjustment values accounting for a speed of the AGV (130) while passing over the weight sensing area (932, 934).

9. The method of any one of claims 1 to 8, wherein obtaining weight values associated with the AGV (130) comprises obtaining a series of weight values over a period of time and/or at a given frequency.

10. The method of claim 9, wherein the period of time starts when the AGV (130) engages on the weight sensing area (932) and stops when the AGV (130) disengages from the weight sensing area (934).

11. The method of any one of claims 1 to 10, wherein determining, based on the weight dynamic pattern (1000), that the at least one article (406) has been loaded or unloaded at the pickup station (920) comprises comparing the weight dynamic pattern (1000) with an anticipated mass of the AGV if an unloading event would occur.

12. The method of any one of claims 1 to 10, wherein determining, based on the weight dynamic pattern (1000), that the at least one article (406) has been loaded or unloaded at the pickup station (920) comprises comparing the weight dynamic pattern (1000) with an anticipated mass of the AGV if a loading event would occur.

13. A computer-implemented system configured to perform the method of any one of claims 1 to 12.

14. A logistic system comprising an AGV (130) configured to carry articles (406) located within a container (122), a preparation station (820), and a controller (232) configured to execute the method of any one of claims 1 to 12.

15. A non-transitory computer readable medium comprising instructions which, upon being executed by a processor (not depicted), cause execution of the method according to any one of claims 1 to 12.
